(19)

**Europäisches Patentamt**
**European Patent Office**
**Office européen des brevets**

(11) **EP 4 543 100 A1**

(12) **EUROPEAN PATENT APPLICATION**
published in accordance with Art. 153(4) EPC

(43) Date of publication:
**23.04.2025 Bulletin 2025/17**

(21) Application number: **23850445.0**

(22) Date of filing: **02.08.2023**

(51) International Patent Classification (IPC):
**H04W 52/02** (2009.01)

(52) Cooperative Patent Classification (CPC):
**H04W 52/02**

(86) International application number:
**PCT/KR2023/011370**

(87) International publication number:
**WO 2024/029945 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.08.2022 KR 20220097526**

(71) Applicant: **Samsung Electronics Co., Ltd.
Suwon-si, Gyeonggi-do 16677 (KR)**

(72) Inventors:
• **YI, Junyung
  Suwon-si Gyeonggi-do 16677 (KR)**
• **PARK, Sungjin
  Suwon-si Gyeonggi-do 16677 (KR)**
• **YANG, Hyewon
  Suwon-si Gyeonggi-do 16677 (KR)**
• **LEE, Jaewon
  Suwon-si Gyeonggi-do 16677 (KR)**
• **CHOI, Seunghoon
  Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR DECREASING POWER CONSUMPTION OF USER EQUIPMENT HAVING WAKEUP RECEIVER IN WIRELESS COMMUNICATION SYSTEM**

(57) The present disclosure relates to a 5G or 6G communication system for supporting higher data transmission rates. In addition, disclosed is a method performed by a user equipment in a wireless communication system, the method comprising the steps of: receiving configuration information about a wakeup signal (WUS) from a base station; determining, on the basis of the configuration about the WUS, a timer indicating a period during which the WUS is to be received using a wakeup receiver (WUR); enabling the WUR and disabling a main radio receiver during the period indicated by the timer; and determining at least one of the coverage or channel state of the user equipment during the period indicated by the timer.

FIG.6

## Description

[Technical Field]

The disclosure relates to a wireless communication system and, in particular, to a method and a device for reducing the power consumption of a user equipment having a wake-up receiver.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm\Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to reduce power consumption of terminals.

[Disclosure of Invention]

[Technical Problem]

In accordance with the above discussion, the disclosure is to provide a method and a device for reducing the power consumption of a user equipment having a wake-up receiver in a wireless communication system.

[Solution to Problem]

According to an embodiment of the disclosure, a method performed by a user equipment in a wireless communication system may include receiving configuration information on a wake-up signal (WUS) from a base station, based on the configuration information on the WUS, determining a timer indicating a time during which the WUS is received using a wake-up receiver (WUR), during the time indicated by the timer, activating the WUR and deactivating a main radio receiver, and during the time indicated by the timer, determining at least one of a coverage or a channel state of the user equipment.

[Advantageous Effects of Invention]

The disclosure provides a device and a method capable of effectively providing services in a wireless communication system.

[Brief Description of Drawings]

FIG. 1 illustrates a basic structure of a time-frequency resource domain in a 5G system according to an embodiment of the disclosure.

FIG. 2 illustrates an example of a beam sweeping operation and a time domain mapping structure of a synchronization signal according to an embodiment of the disclosure.

FIG. 3 illustrates an example of a random access procedure according to an embodiment of the disclosure.

FIG. 4 illustrates an example of a procedure in which a UE reports UE capability information to a base station according to an embodiment of the disclosure.

FIG. 5 is a diagram illustrating an operation in which a base station according to an embodiment of the disclosure indicates, through a WUS, switching of a main radio state of a UE having a WUR.

FIG. 6 is a diagram illustrating an operation of identifying a coverage and a state of a channel, based on a timer during a sleep mode by a UE having a WUR according to an embodiment of the disclosure.

FIG. 7 is a diagram illustrating an operation of identifying a coverage and a state of a channel by using a measurement WUS by a UE having a WUR according to an embodiment of the disclosure.

FIG. 8 is a diagram illustrating an operation of measuring the reference signal received power (RSRP) of a measurement WUS and determining a coverage and a state of a channel by a UE having a WUR according to an embodiment of the disclosure.

FIG. 9 is a diagram illustrating an operation of periodically activating main radio to identify a coverage and a state of a channel during a sleep mode by a UE having a WUR according to an embodiment of the disclosure.

FIG. 10 is a flowchart illustrating a UE operation for determining a coverage and a state of a channel of a UE having a WUR according to an embodiment of the disclosure.

FIG. 11 is a flowchart illustrating a base station operation for determining a coverage and a state of a channel of a UE having a WUR according to an embodiment of the disclosure.

FIG. 12 is a block diagram illustrating a structure of a UE according to an embodiment of the disclosure.

FIG. 13 is a block diagram illustrating a structure of a base station according to an embodiment of the disclosure.

[Mode for Carrying out the Invention]

Hereinafter, embodiments of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description, terms and names defined in the 3GPP new radio standards (3GPP NR: 5th generation mobile communication standards) are used for the sake of descriptive convenience. However, the disclosure is not limited by these terms and names, and may be applied in the same way to systems that conform other standards. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In order to process mobile data traffic which has recently increased exponentially, initial standards of new radio (NR) access technology or 5th generation (5G) systems which are next-generation communication systems after long term evolution (LTE) (or evolved universal terrestrial radio access (E-UTRA)) and LTE-advanced (LTE-A) (or E-UTRA evolution) have been completed. While legacy mobile communication systems have focused on conventional voice/data communication, 5G systems aim to satisfy various services and requirements, such as an enhanced mobile broadband (eMBB) service for improving legacy voice/data communication, an ultra-reliable and low latency communication (URLLC) service, and a massive machine type communication (MTC) service supporting massive machine-to-machine communication.

The system transmission bandwidth per single carrier of legacy LTE and LTE-A is limited to a maximum of 20MHz, but 5G systems aim to provide super-fast data services up to multiple Gbps by using super-broad bandwidths far wider than the same. Accordingly, 5G systems consider super-high-frequency bands ranging from multiple GHz to a maximum of 100 GHz, in which it is relatively easy to secure super-broad-bandwidth frequencies, as candidate frequencies. Additionally, it is possible to secure broad-bandwidth frequencies for 5G systems through frequency rearrangement or allocation among frequency bands ranging from hundreds of MHz to multiple GHz used in legacy mobile communication systems.

Radio waves in super-high frequency bands have millimeter-level wavelengths and thus are also referred to as millimeter waves (mmWave). However, the pathloss of radio waves in super-high frequency bands increases in proportion to the frequency band, thereby reducing the coverage of the mobile communication systems.

In order to overcome the shortcoming of coverage reduction in super-high frequency bands, a beamforming technology is applied such that the distance reached by radio waves is increased by concentrating the energy radiated by the radio waves at a specific target point by using multiple antennas. That is, signals to which the beamforming technology is applied have a smaller beam width, and radiated energy is concentrated within the smaller beam width, thereby increasing the distance reached by radio waves. The beamforming technology may be applied to each of the transmission and reception ends. In addition to the increased coverage, the beamforming technology is also advantageous in that interference is reduced in regions in directions other than the beamforming direction. Appropriate operations of the beamforming technology require a method for accurately measuring transmitted/received beams and sending feedback. The beamforming technology may be applied to a control channel or a data channel having one-to-one correspondence between a UE and a base station. In addition, the beamforming technology may also be applied to a control channel and a data channel for transmitting a common signal transmitted from a gNB to multiple UEs in the system, such as a synchronization signal, a physical broadcast channel (PBCH), and system information, in order to increase the coverage. When the beamforming technology is applied to a common signal, a beam sweeping technology is additionally applied such that the signal is transmitted after changing the beam direction, thereby ensuring that the common signal can reach a UE existing at a specific location inside the cell.

As another requirement of 5G systems, an ultra-low latency service is required such that the transmission delay between the transmission and reception ends is about 1ms or less. In an attempt to reduce the transmission delay, there is a need for frame structure design based on a shorter transmission time interval (TTI) than LTE and LTE-A. The TTI is the basic time unit for performing scheduling, and legacy LTE and LTE-A have a TTI of 1ms, which corresponds to the length of one subframe. For example, the short TTI, on which 5G systems are based in order to meet the requirement regarding the ultra-low latency service, may be 0.5ms, 0.25ms, 0.125ms, or the like, which is shorter than legacy LTE and LTE-A.

According to an embodiment of the disclosure, a method for signal transmission by a UE having a wakeup receiver in a mobile communication system may be defined, thereby solving the problem of excessive power consumption by the UE and accomplishing a high level of energy efficiency.

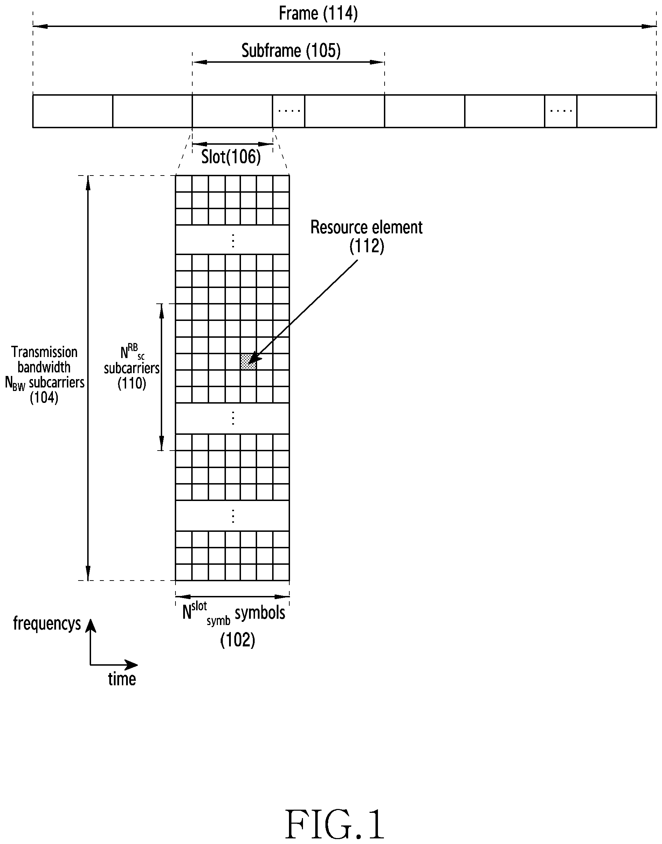

FIG. 1 illustrates a basic structure of a time-frequency resource domain in a 5G system according to an embodiment of the disclosure. That is, FIG. 1 illustrates the basic structure of a time-frequency resource domain which is a radio resource domain used to transmit data or control channels in a 5G system.

Referring to FIG. 1, the horizontal axis in FIG. 1 denotes the time domain, and the vertical axis denotes the frequency domain. The minimum transmission unit in the time domain of the 5G system is an orthogonal frequency division multiplexing (OFDM) symbol, a group of $N_{symb}^{slot}$ symbols 102 may constitute one slot 106, and a group of $N_{slot}^{subframe}$ slots may constitute one subframe 105. The length of one subframe 105 may be 1.0ms, and a group of ten subframes may constitute a 10ms frame 114. The minimum transmission unit in the frequency domain is a subcarrier, and a total of $N_{BW}$ subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive $N_{sc}^{RB}$ subcarriers 110 in the frequency domain. In the 5G system, $N_{sc}^{RB} = 12$, and the data rate may increase in proportion to the number of RBs scheduled for a UE.

In the 5G system, a base station may map data in units of RBs, and may generally schedule RBs constituting one slot with regard to a specific UE. That is, the basic time unit to perform scheduling in 5G systems may be a slot, and the basic frequency unit to perform scheduling may be an RB.

The number of OFDM symbols, $N_{symb}^{slot}$, is determined according to the length of a cyclic prefix (CP) which is added to each symbol in order to prevent intersymbol interference. For example, if a normal CP is applied, $N_{symb}^{slot} = 14$ and, if an extended CP is applied, $N_{symb}^{slot} = 12$. The extended CP is applied to a system having a larger radio-wave transmission distance than the normal CP, thereby maintaining orthogonality between symbols. In the case of the normal CP, the ratio between the CP length and the symbol length may be maintained at a constant value such that the overhead due to the CP remains constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in 5G systems, various frame structures may be supported by adjusting the subcarrier spacing. For example,

In terms of the operating frequency band, the larger the subcarrier spacing, the more advantageous for restoration of phase noise in high-frequency bands.

From the viewpoint of the transmission time, the larger the subcarrier spacing, the smaller the symbol length in the time domain. The resulting smaller slot length makes it more advantageous to support a super-low-latency service such as URLLC.

From the viewpoint of the cell size, the larger the CP length, the larger cell can be supported, meaning that the smaller the subcarrier spacing, the larger cell can be supported. The term "cell" refers to a region covered by one gNB in connection with mobile communication.

The subcarrier spacing, the CP length, and the like correspond to information indispensable to OFDM transmission/reception, and a gNB and a UE need to recognize the subcarrier spacing, the CP length, and the like as mutually common values such that efficient transmission/reception is possible. [Table 1] describes the relationship between the subcarrier spacing configuration ($\mu$), the subcarrier spacing ($\Delta f$), and the CP length supported in 5G systems.

[Table 1]

| μ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] enumerates the number ($N_{symb}^{slot}$) of symbols per one slot, the number ($N_{symb}^{slot}$) of slots per one frame, and the number ($N_{slot}^{subframe,\mu}$) of slots per one subframe with regard to each subcarrier spacing configuration ($\mu$) in the case of a normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 3] enumerates the number ( $N_{symb}^{slot}$ ) of symbols per one slot, the number ( $N_{slot}^{frame,\mu}$ )of slots per one frame, and the number ( $N_{slot}^{subframe,\mu}$ ) of slots per one subframe with regard to each subcarrier spacing configuration ($\mu$) in the case of an extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

It is expected that 5G systems, in the early state of introduction, will at least coexist with legacy LTE and/or LTE-A (hereinafter, referred to as LTE/LTE-A) systems or operate in a dual mode. Accordingly, legacy LTE/LTE-A may provide UEs with stable system operations, and the 5G systems may play the role of providing UEs with improved services. Therefore, the frame structure of 5G systems needs to include at least the frame structure of LTE/LTE-A or an essential parameter set (subcarrier spacing = 15kHz).

For example, a comparison between a frame structure having a subcarrier spacing configuration $\mu$ = 0 (hereinafter, referred to as frame structure A) and a frame structure having a subcarrier spacing configuration $\mu$ = 1 (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the framed structure of 5G systems, the subcarrier spacing, the CP length, the slot length, and the like (essential parameter set) are integer multiples with each other with regard to each frame structure, thereby providing a high degree of extendibility. In addition, a subframe having a fixed length of 1ms may be defined to represent a reference time unit unrelated to the frame structure.

The frame structure may be applied according to various scenarios. From the viewpoint of the cell size, the larger the CP length, the larger cells can be supported, meaning that frame structure A may support larger cells than frame structure B. From the viewpoint of the operating frequency band, the larger the subcarrier spacing, the more advantageous to high-frequency-band phase noise restoration, meaning that frame structure B may support a relatively higher operating frequency than frame structure A. From the viewpoint of services, the smaller the slot length (basic time unit of scheduling), the more advantageous to supporting a super-low-latency service such as URLLC, meaning that frame structure B may be more appropriate for an URLLC service than frame structure A.

As used in the following description of the disclosure, the uplink (UL) may refer to a radio link via which a UE transmits data or control signals to a base station, and the downlink (DL) may refer to a radio link via which the base station transmits data or control signals to the UE.

In an initial access step in which a user equipment initially accesses a system, the user equipment may perform downlink time and frequency domain synchronization and acquire a cell identifier (ID) from a synchronization signal, transmitted by a base station, through a cell search. In addition, the UE may receive a physical broadcast channel (PBCH) by using the acquired cell ID and acquire a master information block (MIB) as mandatory system information from the PBCH. Additionally, the UE may receive system information (system information block (SIB)) transmitted by the base station to acquire cell-common transmission and reception-related control information. The cell-common transmission and reception-related control information may include random access-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

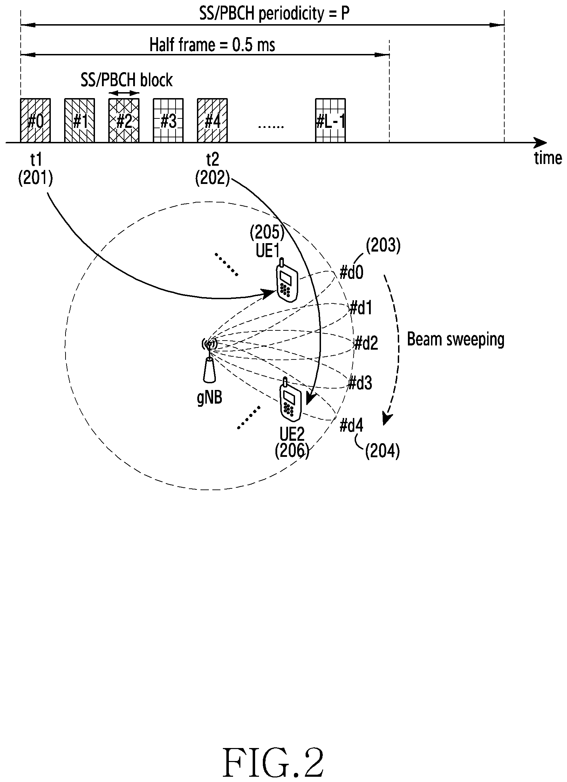

FIG. 2 illustrates a beam sweeping operation and a time domain mapping structure of a synchronization signal according to an embodiment of the disclosure.

For description purposes, the following elements may be defined. Obviously, the example given below is not limiting.

Primary synchronization signal (PSS): A PSS is a signal that serves as a reference for DL time/frequency synchronization, and provides a part of cell ID information.

Secondary synchronization signal (SSS): An SSS serves as a reference for DL time/frequency synchronization, and provides the other part of the cell ID information. Additionally, the SSS may serve as a reference signal for PBCH demodulation of a PBCH.

Physical broadcast channel (PBCH): A PBCH provides a master information block (MIB) which is essential system information required for transmission and reception of a data channel and a control channel of a UE. The mandatory system information may include search space-related control information indicating radio resource mapping information of a control channel, scheduling control information for a separate data channel for transmission of system information, a system frame number (SFN) which is a frame unit index that serves as a timing reference, and other information.

Synchronization signal/PBCH block (SS/PBCH block) or SSB: An SS/PBCH block is configured by N OFDM symbols and may include a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a UE of period P via signaling. If there is no separate signaling of period P, the UE may apply a previously agreed default value.

Referring to FIG. 2, FIG. 2 illustrates an example in which beam sweeping is applied in units of SS/PBCH blocks over time. In the example of FIG. 2, UE 1 205 receives an SS/PBCH block by means of a beam emitted in direction #d0 201 by beamforming applied to SS/PBCH block #0 at time point t1 203. In addition, UE 2 206 receives an SS/PBCH block by means of a beam emitted in direction #d4 202 by beamforming applied to SS/PBCH block #4 at time point t2 204. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

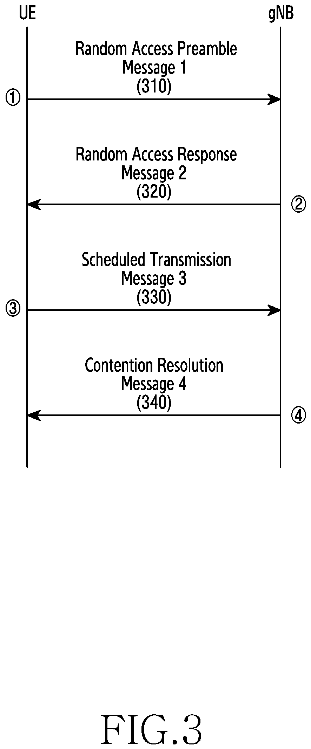

After acquiring an MIB and system information from the base station through the initial access procedure, the UE may perform a random access procedure in order to switch a link to the base station to a connected state (or RRC _CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates an example of a random access procedure according to an embodiment of the disclosure.

Referring to FIG. 3, in the first step 310 of the random access procedure, the UE may transmit a random access preamble to the gNB. The random access preamble, which is a message initially transmitted by the UE in the random access procedure, may be referred to as message 1. The gNB may measure the transmission delay value between the UE and the gNB from the random access preamble, and may conduct uplink synchronization. The UE may arbitrarily select which random access preamble is to be used, from a random access preamble set given by system information in advance. In addition, the initial transmission power of the random access preamble may be determined according to the pathloss between the gNB and the UE, which is measured by the UE. Furthermore, the UE may determine the transmission beam direction of the random access preamble from a synchronization signal received from the gNB, thereby transmitting the random access preamble.

In the second step 320, the gNB transmits an uplink transmission timing adjustment command to the UE, based on the transmission delay value measured from the random access preamble received in the first step 310. The gNB may also transmit a power control command and an uplink resource to be used by the UE, as scheduling information. The scheduling information may include control information regarding the UE's uplink transmission beam.

If the UE fails to receive a random access response (RAR) (or message 2) which is scheduling information regarding message 3 from the gNB within a predetermined time in the second step 320, the UE may conduct the first step 310 again. When performing the first step 310 again, the UE may transmit the random access preamble after increasing the transmission power thereof by a predetermined step (power ramping), thereby increasing the probability that the gNB will receive the random access preamble.

In the third step 330, the UE transmits uplink data (message 3) including the UE's ID to the gNB through a physical uplink shared channel (PUSCH) by using uplink resources assigned in the second step 320. The transmission timing of the PUSCH for transmitting message 3 may follow a timing control command received from the gNB in the second step 320. The transmission power of the PUSCH for transmitting message 3 may be determined in consideration of a power control command received from the gNB in the second step 320 and the random access preamble's power ramping value. The PUSCH for transmitting message 3 may refer to an uplink data signal initially transmitted to the gNB by the UE after the UE has transmitted a random access preamble.

In the fourth step 340, upon determining that the UE has performed a random access without contention with other UEs, the gNB transmits data (message 4) including the ID of the UE which transmitted uplink data in the third step 330 to the corresponding UE. Upon receiving a signal transmitted by the gNB in the fourth step 340, the UE may determine that the random access is successful. The UE may then transmit HARQ-ACK information to the gNB through a physical uplink control channel (PUCCH) to indicate whether or not message 4 has been received successfully.

If the gNB fails to receive a data signal from the UE due to collision between data transmitted by the UE in the third step 330 and data from another UE, the gNB may no longer transmit data to the UE. If the UE thus fails to receive data transmitted from the gNB in the fourth step 340 within a predetermined time, the UE may determine that the random access procedure has failed and may restart from the first step 310.

Upon successfully completing the random access procedure, the UE is switched to a connected state, and one-to-one communication between the gNB and the UE becomes possible. The gNB may receive UE capability information reported by the UE in the connected state, and may adjust the scheduling with reference to the UE capability information from the UE. The UE may inform the gNB of whether the UE supports a specific function or not, the maximum allowed value of the function supported by the UE, and the like through the UE capability information. Therefore, UE capability information reported to the gNB by each UE may have a different value with regard to each UE.

As an example of the UE capability information, the UE may report UE capability information including at least a part of the following control information to the gNB. Obviously, the example given below is not limiting.

Control information regarding the frequency band supported by the UE

Control information regarding the channel bandwidth supported by the UE

Control information regarding the maximum modulation scheme supported by the UE

Control information regarding the maximum number of beams supported by the UE

Control information regarding the maximum number of layers supported by the UE

Control information regarding channel status information (CSI) reporting supported by the UE

Control information regarding whether the UE supports frequency hopping

Control information regarding the bandwidth when carrier aggregation (CA) is supported

Control information regarding whether cross carrier scheduling is supported when CA is supported

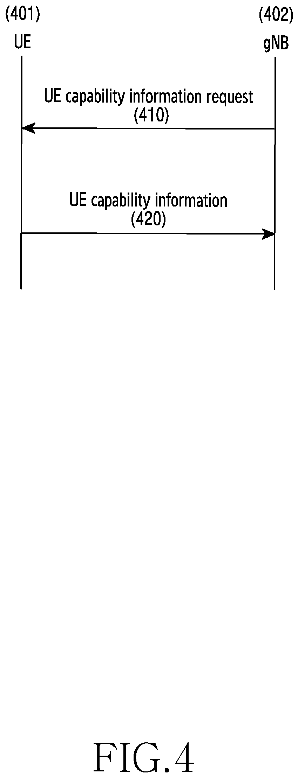

FIG. 4 illustrates an example of a procedure in which a UE reports UE capability information to a gNB according to an embodiment of the disclosure.

Referring to FIG. 4, the gNB 402 may transmit a UE capability information request message to the UE 401 in step 410. At the UE capability information request of the gNB, the UE transmits UE capability information to the gNB in step 420.

Through the above-described process, the UE connected to the gNB may conduct one-to-one communication as a UE in an RRC_CONNECTED state. To the contrary, the UE having no connection may be a UE in an RRC_IDLE state, and operations of the UE in the RRC_IDLE state may be distinguished as follows. Obviously, the example given below is not limiting.

A UE-specific discontinuous reception (DRX) cycle operation configured by the upper layer
An operation of receiving a paging message from the core network
Acquiring system information
A neighboring cell-related measurement operation and cell reselection

In 5G systems, a new UE state (RRC_INACTIVE) has been defined to reduce the energy and time consumed for the UE's initial access. The RRC_INACTIVE UE may perform the following operations in addition to operations performed by an RRC_IDLE UE. Obviously, the example given below is not limiting.

Storing access stratum (AS) information necessary for cell access
UE-specific DRX cycle operation configured by the RRC layer
Configuring a RAN-based notification area (RNA) which may be utilized during a handover by the RRC layer, and periodically performing update

Monitoring a RAN-based paging message transmitted through an I-RNTI

Hereinafter, a scheduling method in which the gNB transmits downlink data to the UE, or instructs the UE to transmit uplink data, will be described.

Downlink control information (DCI) refers to control information transmitted to from the gNB to a UE through the downlink, and may include downlink data scheduling information or uplink data scheduling information regarding a specific UE. In general, the gNB may independently channel-code DCI with regard to each UE and may transmit the same to each UE through a physical downlink control channel (PDCCH).

With regard to a UE to be scheduled, the gNB may apply and operate a predetermined DCI format according to the purpose, such as whether the same is scheduling information regarding downlink data (downlink assignment), whether the same is scheduling information regarding uplink data (uplink grant), or whether the same is DCI for power control.

The gNB may transmit downlink data to the UE through a physical downlink shared channel (PDSCH). Scheduling information such as detailed mapping locations in time and frequency domains of the PDSCH, the modulation scheme, HARQ-related control information, and power control information, may be provided from the gNB to the UE through DCI related to downlink data scheduling information among DCI transmitted through a PDCCH.

The UE may transmit uplink data to the gNB through a physical uplink shared channel (PUSCH). Scheduling information such as detailed mapping locations in time and frequency domains of the PUSCH, the modulation scheme, HARQ-related control information, and power control information, may be provided from the gNB to the UE through DCI related to uplink data scheduling information among DCI transmitted through a PDCCH.

The time-frequency resource to which the PDCCH is mapped is referred to as a control resource set (CORESET). The CORESET may be configured in all or part of frequency resources in a bandwidth supported by the UE in the frequency domain. One or multiple OFDM symbols may be configured as the same in the time domain, and this may be defined as a control resource set (CORESET) duration. The gNB may configure one CORESET or multiple CORESETs for the UE through upper layer signaling (for example, system information, master information block (MIB), radio resource control (RRC) signaling). The description that a CORESET is configured for the UE may mean that information such as the CORESET identity, the CORESET's frequency location, and the CORESET's symbol length is provided thereto. Pieces of information provided from the gNB to the UE to configure a CORESET may include at least a part of the information included in [Table 4] below:

[Table 4]

```
ControlResourceSet ::=          SEQUENCE {
    controlResourceSetId          ,
(CORESET identity)
    frequencyDomainResources      BIT STRING (SIZE (45)),
(frequency domain resources)
    duration                      INTEGER (1..maxCoReSetDuration),
(CORESET duration)
    cce-REG-MappingType           CHOICE {
(CCE-to-REG mapping type)
        interleaved                   SEQUENCE {
            reg-BundleSize            ENUMERATED {n2, n3, n6},
            (REG bundle size)
            interleaverSize           ENUMERATED {n2, n3, n6},
            (interleaver size)
            shiftIndex
INTEGER(0..maxNrofPhysicalResourceBlocks-1)        OPTIONAL -- Need S
            (interleaver shift)
        },
        nonInterleaved                NULL
    },
    precoderGranularity               ENUMERATED  {sameAsREG-bundle,
allContiguousRBs},
(precoding unit)
    tci-StatesPDCCH-ToAddList      SEQUENCE(SIZE  (1..maxNrofTCI-StatesPDCCH))
OF TCI-StateId OPTIONAL, -- Cond NotSIB1-initialBWP
(QCL configuration information)
    tci-StatesPDCCH-ToReleaseList   SEQUENCE(SIZE (1..maxNrofTCI-StatesPDCCH))
OF TCI-StateId OPTIONAL, -- Cond NotSIB1-initialBWP
(QCL configuration information)
    tci-PresentInDCI                              ENUMERATED  {enabled}
```

```
OPTIONAL, -- Need S

        (QCL indicator configuration information within DCI)

            pdcch-DMRS-ScramblingID                                  INTEGER   (0..65535)

OPTIONAL, -- Need S

        (PDCCH DMRS scrambling identity)

            }
```

A CORESET may be configured by $N_{RR}^{CORESET}$ RBs in the frequency domain and may be configured by $N_{symb}^{CORESET} \in \{1,2,3\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed in the time-first order, starting from REG index 0 in the CORESET's first CORESET symbol/lowest RB.

As a PDCCH-related transmission method, an interleaved type and a non-interleaved type may be supported. The gNB may configure, for the UE, whether interleaved or non-interleaved transmission is performed with regard to each CORESET through upper layer signaling. Interleaving may be performed at the REG bundle level. The REG bundle may be defined as one REG or a set of multiple REGs. Based on the gNB's configuration regarding whether interleaved or non-interleaved transmission is performed, the UE may determine a CCE-to-REG mapping type in the corresponding CORESET as in [Table 5] below:

[Table 5]

The CCE-to-REG mapping for a control-resource set can be interleaved or non-interleaved and is described by REG bundles:

- REG bundle $i$ is defined as REGs $\{iL,iL+1,...,iL+L-1\}$ where $L$ is the REG bundle size, $i = 0,1,...,N_{REG}^{CORESET}/L - 1$, and $N_{REG}^{CORESET} = N_{RB}^{CORESET} N_{symb}^{CORESET}$ is the number of REGs in the CORESET

- CCE $j$ consists of REG bundles $\{f(6j/L), f(6j/L+1),..., f(6j/L+6/L-1)\}$ where $f(\cdot)$ is an interleaver

For non-interleaved CCE-to-REG mapping, $L = 6$ and $f(x) = x$.

For interleaved CCE-to-REG mapping, $L \in \{2,6\}$ for $N_{symb}^{CORESET} = 1$ and $L \in \{N_{symb}^{CORESET}, 6\}$ for $N_{symb}^{CORESET} \in \{2,3\}$. The interleaver is defined by

$$f(x) = (rC + c + n_{shift}) \bmod (N_{REG}^{CORESET}/L)$$
$$x = cR + r$$
$$r = 0,1,...,R-1$$
$$c = 0,1,...,C-1$$
$$C = N_{REG}^{CORESET}/(LR)$$

where $R \in \{2,3,6\}$.

The gNB may provide the UE with configuration information regarding to which symbol the PDCCH is mapped in the slot, the transmission period, and the like through signaling.

A description of a search space for a PDCCH is as follows. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured ALs.

The search spaces may be classified into common search spaces (CSSs) and UE-specific search spaces (USSs). A group of UEs or all UEs may search a common search space of the PDCCH in order to receive cell-common control information such as dynamic scheduling regarding system information or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

Configuration information of the search space for the PDCCH may be configured for the UE by the base station through upper layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, parameters of the search space for the PDCCH may include the following pieces of information given in Table 6 below.

[Table 6]

| | |
|---|---|
| SearchSpace ::= | SEQUENCE { |
| searchSpaceId | , |
| (search space identity) | |
| controlResourceSetId | OPTIONAL, -- Cond SetupOnly |
| (CORESET identity) | |
| monitoringSlotPeriodicityAndOffset CHOICE { | |
| (monitoring slot level periodicity and offset) | |
| sl1 | NULL, |
| sl2 | INTEGER (0..1), |
| sl4 | INTEGER (0..3), |
| sl5 | INTEGER (0..4), |

```
                    sl8                              INTEGER (0..7),

                    sl10                             INTEGER (0..9),

                    sl16                             INTEGER (0..15),

                    sl20                             INTEGER (0..19),

                    sl40                             INTEGER (0..39),

                    sl80                             INTEGER (0..79),

                    sl160                            INTEGER (0..159),

                    sl320                            INTEGER (0..319),

                    sl640                            INTEGER (0..639),

                    sl1280                           INTEGER (0..1279),

                    sl2560                           INTEGER (0..2559)

               }
OPTIONAL,    -- Cond Setup

           duration                              INTEGER         (2..2559)
OPTIONAL,    -- Need R

        (monitoring duration)

        monitoringSymbolsWithinSlot                 BIT   STRING   (SIZE   (14))
OPTIONAL,    -- Cond Setup

        (monitoring symbol location within slot)

        nrofCandidates               SEQUENCE {

    (number of PDCCH candidates at each aggregation level)

               aggregationLevel1            ENUMERATED {n0, n1, n2, n3, n4, n5,
n6, n8},

               aggregationLevel2            ENUMERATED {n0, n1, n2, n3, n4, n5,
n6, n8},

               aggregationLevel4            ENUMERATED {n0, n1, n2, n3, n4, n5,
n6, n8},

               aggregationLevel8            ENUMERATED {n0, n1, n2, n3, n4, n5,
n6, n8},

               aggregationLevel16           ENUMERATED {n0, n1, n2, n3, n4, n5,
n6, n8}

           }
OPTIONAL,    -- Cond Setup
```

```
        searchSpaceType                        CHOICE {
    (search space type)
            common                                 SEQUENCE {
        (common search space)
                dci-Format0-0-AndFormat1-0             SEQUENCE {

                    ...

                }
OPTIONAL,    -- Need R
                dci-Format2-0                          SEQUENCE {
                    nrofCandidates-SFI                     SEQUENCE {
                        aggregationLevel1                      ENUMERATED {n1, n2}
OPTIONAL,    -- Need R
                        aggregationLevel2                      ENUMERATED {n1, n2}
OPTIONAL,    -- Need R
                        aggregationLevel4                      ENUMERATED {n1, n2}
OPTIONAL,    -- Need R
                        aggregationLevel8                      ENUMERATED {n1, n2}
OPTIONAL,    -- Need R
                        aggregationLevel16                     ENUMERATED {n1, n2}
OPTIONAL     -- Need R
                    },

                    ...

                }
OPTIONAL,    -- Need R
                dci-Format2-1                          SEQUENCE {

                    ...

                }
OPTIONAL,    -- Need R
                dci-Format2-2                          SEQUENCE {

                    ...

                }
OPTIONAL,    -- Need R
                dci-Format2-3                          SEQUENCE {
```

```
                          dummy1                                ENUMERATED {sl1, sl2,
sl4, sl5, sl8, sl10, sl16, sl20}    OPTIONAL,      -- Cond Setup
                          dummy2                                ENUMERATED {n1, n2},
                   ...
              }
OPTIONAL       -- Need R
              },
              ue-Specific                           SEQUENCE {
              (UE-specific search space)
                   dci-Formats                            ENUMERATED {formats0-0-
And-1-0, formats0-1-And-1-1},
                        ...,

              }
           }
OPTIONAL       -- Cond Setup2
           }
```

According to configuration information, the base station may configure one or multiple search space sets for the UE. According to an embodiment of the disclosure, the base station may configure search space set 1 and search space set 2 for the UE. In search space set 1, the UE may be configured to monitor DCI format A scrambled by an X-RNTI in a common search space, and in search space set 3, the UE may be configured to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the example given below is not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In a UE-specific search space, the UE may monitor combinations of DCI formats and RNTIs given below. Obviously, the example given below is not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs enumerated above may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI (RA-RNTI): used to schedule a PDSCH in a random access step

- Paging RNTI (P-RNTI): used to schedule a PDSCH in which paging is transmitted
- System information RNTI (SI-RNTI): used to schedule a PDSCH in which system information is transmitted
- Interruption RNTI (INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

The search space at aggregation level L in connection with CORESET p and search space set s may be expressed by the following equation.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set p
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$ : PDCCH candidate index at aggregation level L
- $i = 0, ..., L - 1$
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p = 39827$ $for\ pmod\ 3 = 0$, $A_p = 39829$ $for\ pmod\ 3 = 1$, $A_p = 39839$ $for\ pmod\ 3 = 2$, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-

As described above, signal transmission/reception in super-broad bandwidths ranging from tens or hundreds of MHz or multiple GHz may be supported to accomplish a super-fast data service at multiple Gbps in 5G systems. Signal transmission/reception in super-broad bandwidths may be supported through a single component carrier (CC) or through a carrier aggregation (CA) technology which combines multiple CCs. If a mobile communication operator fails to secure a bandwidth of frequencies sufficient to provide a super-fast data service by using a single CC, the CA technology may combine respective CCs having relatively small bandwidth sizes such that the total sum of frequency bandwidths increases, thereby enabling a super-fast data service.

5G systems are designed and developed in consideration of all of various use cases. Besides the standby time, reliability, and availability, the UE's energy efficiency is critical in 5G systems. 5G UEs need to be charged on a weekly or daily basis according to the individuals' time of use. In general, 5G UEs consume tens of mW in RRC _IDLE/RRC_INACTIVE states, and consume hundreds of mW in RRC _CONNECTED states. Design for extending the battery life is an indispensable element not only for better user experiences, but also for improved energy efficiency. Energy efficiency is more important to UEs having no continuous energy supply, for example, UEs using small rechargeable and single coin cell batteries. Among 5G use cases, sensors and actuators are arranged for monitoring, measurement, charging, and the like on a wide scale. In general, batteries for sensors or actuators cannot be recharged, and are expected to last at least a number of years. In addition, wearable devices such as smartwatches, rings, eHealth-related devices, and medical monitoring devices can hardly last a maximum of 1-2 weeks, depending on the time of use.

According to an embodiment, a 5G UE's power consumption depends on the configured length of wakeup periods, for example, the paging cycle, and it is expected that an extended discontinuous reception (eDRX) cycle having a large value will be used to satisfy battery lifetime requirements. However, the eDRX scheme maintains a long battery lifetime on the basis of a long standby time, and thus is inappropriate for a service having a short standby time. For example, in the case of use for fire sensing and extinguishing, it is within 1-2 seconds from the timepoint at which a fire is sensed by a sensor that fire shutters need to be closed, and sprinklers need to be activated by actuators. That is, in a use case having a critical standby time, a long eDRX cycle as in existing cases cannot satisfy latency requirements, and the eDRX is thus inappropriate for such a case.

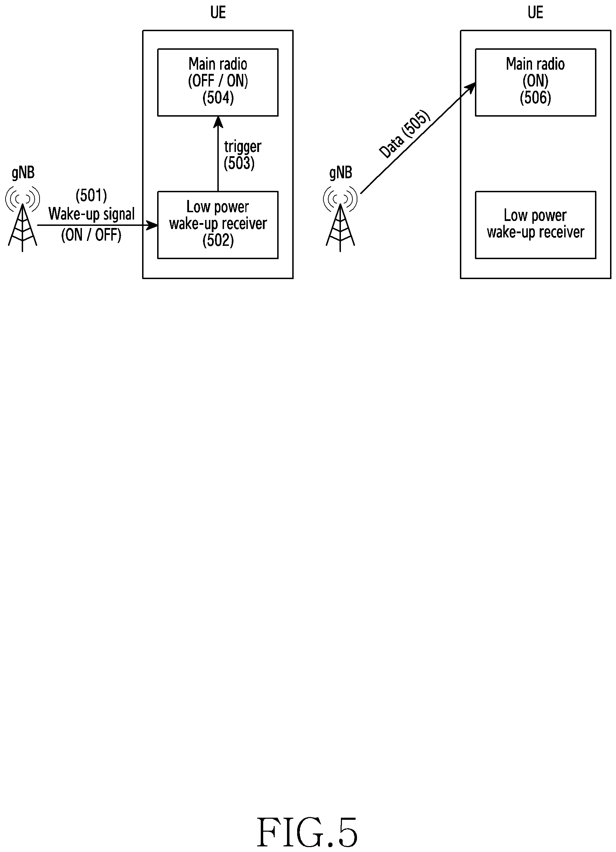

According to an embodiment of the disclosure, a 5G UE may need to periodically wake up once per eDRX cycle, and this may dominate power consumption during a period of time having no signaling or data traffic. Power consumption could be substantially reduced if the UE could wake up only when triggered (for example, through paging). This may be accomplished by a method, as in FIG. 5, wherein the main radio (existing NR radio) is triggered by using a wake-up signal (WUS), and the main radio is turned on only when data transmission/reception is necessary by using a wake-up receiver (WUR) which is a separate receive capable of monitoring the WUS with super-low power.

FIG. 5 is a diagram illustrating an operation in which a base station according to an embodiment of the disclosure indicates, through a WUS, switching of a main radio state of a UE having a WUR.

Referring to FIG. 5, when a base station transmits a WUS 501 corresponding to ON or OFF to a UE, the UE may receive the WUS 501 by using a WUR 502. The received signal may perform triggering 503 of main radio 504 in an OFF or ON state according to ON or OFF information so as to configure the main radio to be woken up or be turned off. The UE may configure the main radio 504 to be in a deep sleep state without completely turning off same in some cases. If data traffic 505 to be transmitted to the UE by the base station occurs and a WUS corresponding to ON is transmitted, the main radio becomes a state of ON 506 and the UE may receive data transmitted by the base station through the main radio rather than the WUR. The power consumption for monitoring a WUS depends on a hardware module of a WUR used for WUS design and signal detection and processing. Therefore, maximized gains may be expected, particularly for power-sensitive and small form factor devices, including IoT use cases (such as industrial sensors and controllers) and wearables.

Through embodiments of the disclosure, proposed is a method for solving the problem wherein a UE having a wake-up receiver (WUR) is unable to be activated in a normal mode due to lack of coverage for a WUS signal caused by movement to a cell edge during a sleep mode.

Hereinafter, a method by which a UE having a wake-up receiver identifies a channel state and a coverage of the UE during an energy saving mode, proposed in the disclosure, is described through specific embodiments.

<First embodiment>

The first embodiment of the disclosure describes an operation of a UE having a WUR, based on a timer. More specifically, a UE operation based on a timer for managing movement of, outside a cell coverage or to an edge, a UE which has a WUR and for which a sleep mode operation is configured is described.

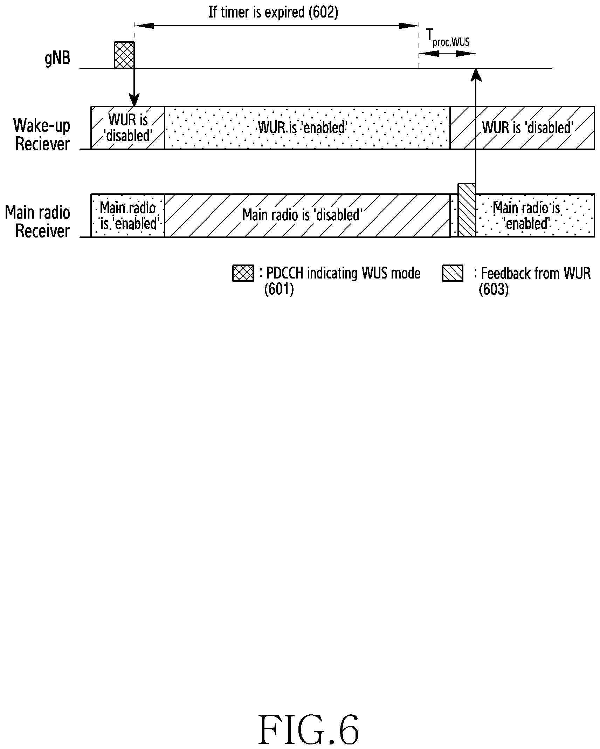

FIG. 6 is a diagram illustrating an operation of identifying a coverage and a state of a channel, based on a timer during a sleep mode by a UE having a WUR according to an embodiment of the disclosure.

Referring to FIG. 6, a sleep mode may be configured for a UE having a WUR by a base station through higher layer signaling and L1 signaling. The UE may activate the WUR, based on the configuration of the sleep mode and deactivate a main radio receiver for energy saving. Thereafter, in order to avoid continuously remaining in the sleep mode and identify a coverage and a state of a channel, the UE may perform a timer-based operation. For example, when a sleep mode is configured for the UE by the base station through a PDCCH 601 in FIG. 6, the UE may apply a timer from the last symbol of the received PDCCH. While the timer is expiring, if the WUR fails to receive a WUS from the base station, the UE may activate the main radio receiver and transmit a feedback 603 for the activation of the main radio receiver to the base station. The UE may, in order to transmit the feedback 603 to the base station, after performing an operation for synchronization through an SSB and a pre-configured reference signal (RS) (e.g., after the processing time $T_{proc,WUS}$ required for transmitting a feedback) transmit the feedback 603 to the base station. As another example, the UE may activate the main radio receiver, then receive an SSB, and transmit a PRACH through a RACH occasion of the SSB to perform feedback. The UE may transmit the PRACH by using a preamble configured by the base station for a WUS sleep mode.

The timer applied in the above method may be determined by the following methods.

- The timer may be reported to the base station as UE capability of the UE and may be applied UE-specifically through an internal implementation operation of the UE.
- The timer may be configured UE group-specifically or WUS-specifically by the base station through higher layer signaling and L1 signaling.

According to an embodiment of the disclosure, the UE may count the timer from a last symbol on which higher layer signaling or L1 signaling indicating a sleep mode of a WUS is received, as a start point at which an operation of the timer is performed. As another method, the UE may count the timer from a moment at which the WUR is activated, as the application time point of the timer.

Through the above method, a UE having a WUR may periodically identify a coverage and a state of a channel, based on a timer. Through the above method, support of a sleep mode having high latency and energy saving is possible. However, energy saving gain may be constrained by the duration of a timer.

<Second embodiment>

The second embodiment of the disclosure describes a UE operation for identifying a coverage and a channel state of a UE including a WUR by using a WUS. More specifically, proposed is a method of identifying a coverage and a channel state through a measurement WUS having a recycled existing WUS design for indicating wake-up, to manage movement of, outside a cell coverage or to an edge, a WUR UE for which a sleep mode operation is configured.

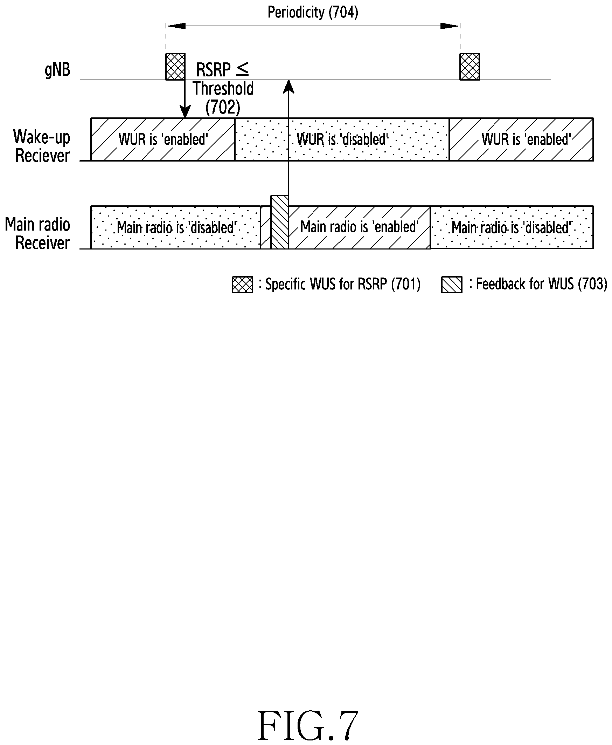

FIG. 7 is a diagram illustrating an operation of identifying a coverage and a state of a channel by using a measurement WUS by a UE having a WUR according to an embodiment of the disclosure.

Referring to FIG. 7, a base station may configure a sleep mode for a UE having a WUR through higher layer signaling and L1 signaling. The UE may save energy by activating the WUR and deactivating a main radio receiver. During the sleep mode, the UE having the WUR may monitor a WUS for measurement and a WUS for change to a normal mode through the WUR. When the UE having the WUR receives a WUS 701 for measurement, the UE may measure the reference signal received power (RSRP) of the received measurement WUS and, if the RSRP value is smaller than a threshold (as indicated by reference numeral 702), may determine that a coverage and a state of a channel are not good, activate the main radio receiver, and transmit a feedback 703 for the WUS to the base station. Through the above method, the UE may measure a WUS for measurement through the WUR to determine a coverage and a state of a channel. The measurement WUS may be configured in the following designs.

- Coherent measurement WUS: A WUS having a specific sequence for measurement may be transmitted with periodicity 704. The base station may configure the periodicity 704 and the specific sequence through higher layer signaling and L1 signaling.
- Non-coherent measurement WUS: The UE may identify a sequence through a WUS having a specific sequence for measurement, then measure the RSRP thereof, and use the WUS. The base station may flexibly transmit the measurement WUS and save the energy of the base station.

According to an embodiment of the disclosure, the UE may perform different operations after activating the main radio receiver according to the above measurement WUSs. For example, since additional synchronization of the UE is possible through a coherent measurement WUS from the base station, if the UE determines, through the measurement WUS, that a coverage and a state of a channel are not good, additional synchronization may not be required when a feedback is transmitted to the base station through main radio. On the contrary, if the UE receives a non-coherent measurement WUS from the base station and determines that a coverage and a state of a channel are not good, the UE may activate the main radio receiver and then preferentially perform synchronization.

According to an embodiment of the disclosure, using a measurement WUS, a UE may measure, through a WUR, the RSRP of a WUS transmitted from a base station. Hereinafter, a relevant description will be given.

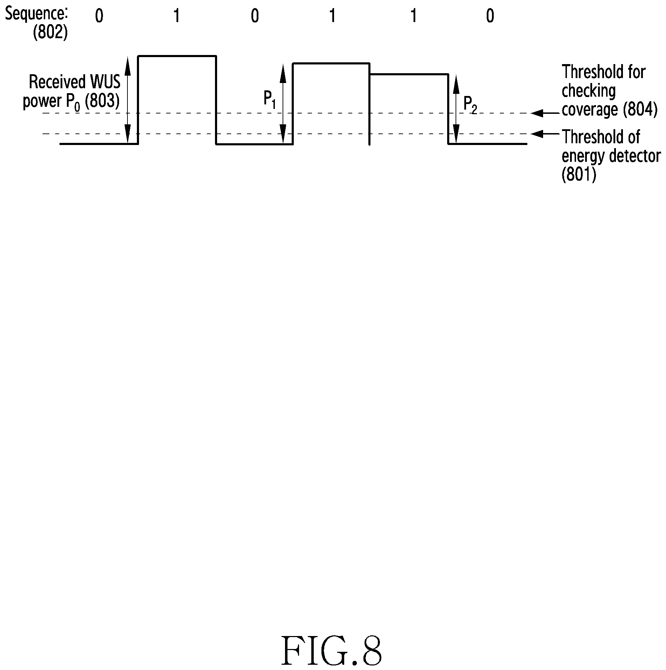

FIG. 8 is a diagram illustrating an operation of measuring the RSRP of a measurement WUS and determining a coverage and a state of a channel by a UE having a WUR according to an embodiment of the disclosure.

Referring to FIG. 8, a base station and a UE may use a signal of a square pulse form as a WUS. The base station may configure a WUS for measurement to have a specific sequence={010110} 802. The UE may detect the configured sequence 802 through an energy detector 801 having a low threshold, and calculate the RSRP of a WUS having the same sequence 802 by using a pulse difference between "0" and "1". For example, the UE may measure $P_0$ 803, $P_1$, and $P_2$ of a received WUS having the specific sequence={010110} 802, and the RSRP may be determined by RSRP = average($P_0$ 803, $P_1$, $P_2$). Thereafter, the UE may use the determined RSRP of the WUS to determine a coverage and a channel state as in the following methods.

- [Method 1] Through $P_{avg}$= average (P0, P1, P2) <Threshold 804, when the average power is smaller than the threshold 804, the UE may determine that pathloss is large and determine that a coverage is lacking or a channel state is not good.

- [Method 2] Through $P_{avg}(n) - P_{avg}(n-1)$ <Threshold 804 = {-3 dB or -6 dB}, the RSRP change between measurement WUSs is measured, and if the RSRP change is smaller than configured -3 dB or -6 dB, the UE may determine that a coverage is lacking or a state of a channel is not good. $P_{avg}(0)$ may be determined as an average value of a measurement WUS firstly transmitted after the WUR is activated.

Through the above methods, the UE may determine a coverage and a state of a channel by using a measurement WUS. The threshold or the sequence and periodicity values of a measurement WUS may be configured through the base station UE-specifically, cell-specifically, or UE group-specifically, or may be determined through UE capability or UE implementation of the UE. In addition, the method of the second embodiment and the method of the first embodiment described above are combined so that, through a method of resetting the timer of the first embodiment every time a measurement WUS having a specific sequence is detected, a situation where the UE infinitely remains at a cell edge and in a sleep mode may be controlled. Through the method of the second embodiment, the UE may determine a coverage and a state of a channel only through the WUR without activating the main radio receiver. Accordingly, the UE may obtain larger energy saving gain.

<Third Embodiment>

The third embodiment of the disclosure describes an operation of measuring a coverage and a state of a channel through periodic main radio by a UE having a WUR. More specifically, described is an operation of in order to manage movement of, outside a cell coverage or to an edge, a UE which has a WUR and for which a sleep mode operation is configured, periodically activating a main radio receiver, then identifying a coverage and a state of a channel, and then converting the UE into a sleep mode without an additional indication of a base station.

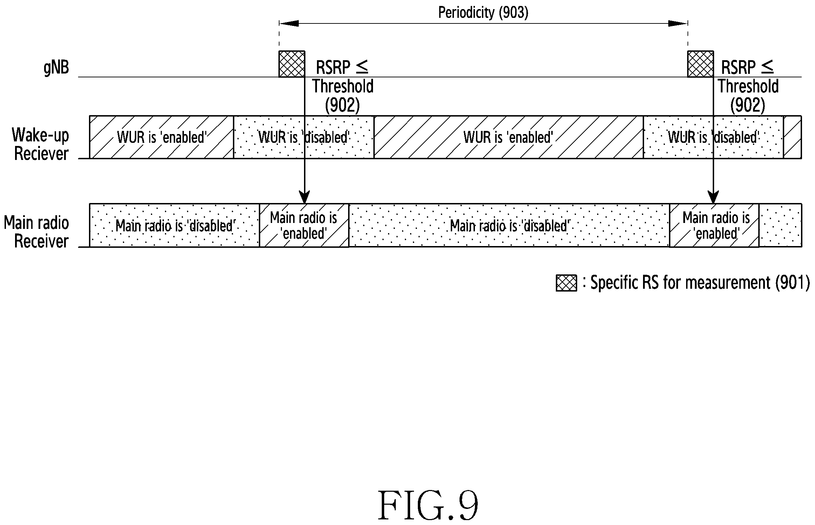

FIG. 9 is a diagram illustrating an operation of periodically activating main radio to identify a coverage and a state of a channel during a sleep mode by a UE having a WUR according to an embodiment of the disclosure.

Referring to FIG. 9, a sleep mode may be configured for a UE having a WUR by a base station through higher layer signaling and L1 signaling, and the UE may activate the WUR and deactivate a main radio receiver. The UE may activate the main radio receiver in order to periodically receive a measurement RS (SSB or CSI-RS) 901 configured by the base station through higher layer signaling and L1 signaling. Thereafter, if the RSRP of the received measurement RS is smaller than a threshold (as indicated by reference numeral 902), the UE may enter the sleep mode and deactivate main radio immediately without feedback. The UE may always activate the WUR or deactivate the WUR while activating the main radio receiver. On the contrary, if the RSRP of the received measurement RS is greater than the threshold, the UE may transmit a feedback to the base station through the activated main radio receiver and be changed from the sleep mode to a normal mode.

Through the third embodiment, a UE having a WUR may save energy and measure more accurate RSRP during a sleep mode to identify a coverage and a state of a channel.

<Fourth Embodiment>

The fourth embodiment of the disclosure describes a block diagram and a flowchart of a UE and a base station for determining a coverage and a state of a channel of the UE having a WUR.

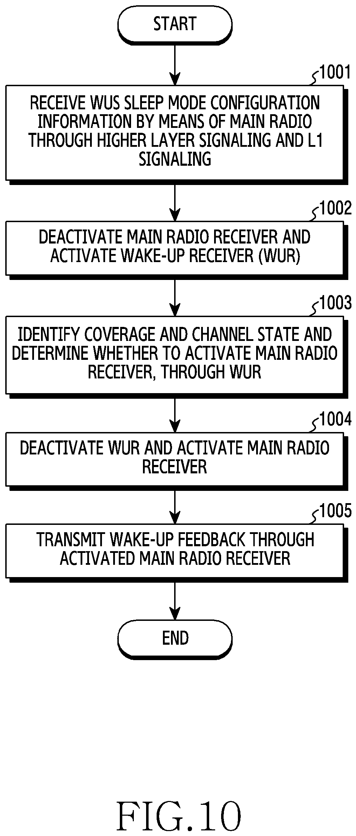

FIG. 10 is a flowchart illustrating a UE operation for determining a coverage and a state of a channel of a UE having a WUR according to an embodiment of the disclosure.

Referring to FIG. 10, a UE may receive WUS sleep mode configuration information from a base station by means of main radio through higher layer signaling and L1 signaling (operation 1001). Thereafter, the UE may deactivate a main radio receiver and activate a wake-up receiver (WUR) (operation 1002). The UE may identify a coverage and a state of a channel and determine whether to activate the main radio receiver, through the WUR during a sleep mode (operation 1003). A method of identifying a coverage and a state of a channel through a WUS may be determined to be one or a combination of the methods of the first embodiment to the third embodiment described above. Thereafter, if the coverage and the state of the channel are good, the UE continuously maintains the sleep mode, and if the coverage and the state of the channel are not good, the UE may change to a normal mode, deactivate the WUR, and activate the main radio receiver (operation 1004). Then, the UE may transmit a wake-up feedback to the base station through the activated main radio receiver (operation 1005).

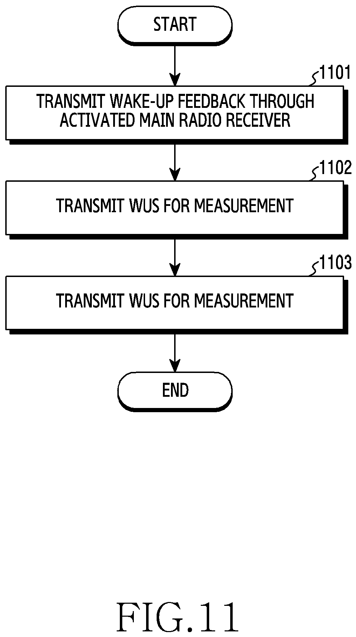

FIG. 11 is a flowchart illustrating a base station operation for determining a coverage and a state of a channel of a UE having a WUR according to an embodiment of the disclosure.

Referring to FIG. 11, a base station may transmit WUS sleep mode configuration information to a UE by means of main radio through higher layer signaling and L1 signaling (operation 1101). Thereafter, the base station may transmit a WUS for measurement for each group of UEs or each UE, the UE being in a sleep mode and having a WUR (operation 1102). As the WUS for measurement, a coherent or non-coherent WUS in one or a combination of the methods of the first embodiment to the third embodiment described above may be transmitted. Thereafter, the base station may receive, from the UE, a feedback relating to whether the UE is woken up through main radio (operation 1103).

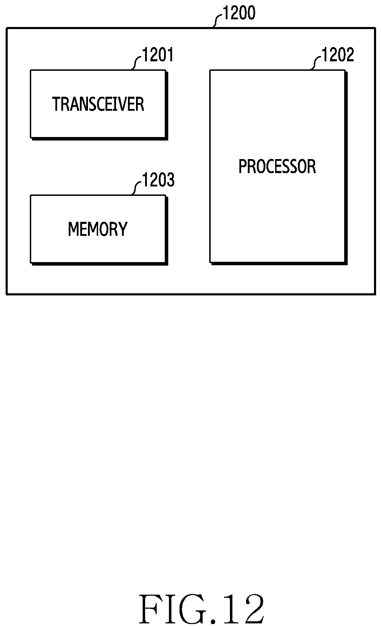

FIG. 12 is a block diagram illustrating a structure of a UE according to an embodiment of the disclosure.

Referring to FIG. 12, the UE 1200 may include a transceiver 1201, a controller (for example, processor) 1202, and a storage (for example, memory) 1203. The transceiver 1201, the controller 1202, and the storage 1203 of the UE 1200 may operate according to at least one or a combination of methods corresponding to the above-described embodiments. However, components of the UE 1200 are not limited to the illustrated example. According to another embodiment, the UE 1200 may include a larger or smaller number of components than the above-described components. Furthermore, in a specific case, the transceiver 1201, the controller 1202, and the storage 1203 may be implemented in the form of a single chip.

According to an embodiment, the transceiver 1201 may include a transmitter and a receiver. The transceiver 1201 may transmit/receive signals with the base station. The signals may include control information and data. The transceiver 1201 may include an RF transmitter configured to up-convert and amplify the frequency of transmitted signals, and an RF receiver configured to low-noise-amplify received signals and down-convert the frequency thereof. The transceiver 1201 may receive signals through a radio channel, output the same to the controller 1202, and transmit signals output from the controller 1202 through the radio channel.

The controller 1202 may control a series of processes such that the UE 1200 can operate according to the above-described embodiments of the disclosure. For example, the controller 1202 may perform or control the UE's operations for performing at least one or a combination of the methods according to embodiments of the disclosure. The controller 1202 may include at least one processor. For example, the controller 1202 may include a communication processor (CP) which performs control for communication and an application processor (AP) which controls upper layers (for example, applications).

The storage 1203 may store control information (for example, channel estimation-related information using DMRSs transmitted in a PUSCH included in a signal acquired by the UE 1200) or data, and may have a region for storing data necessary for control of the controller 1202 and data produced during control by the controller 1202.

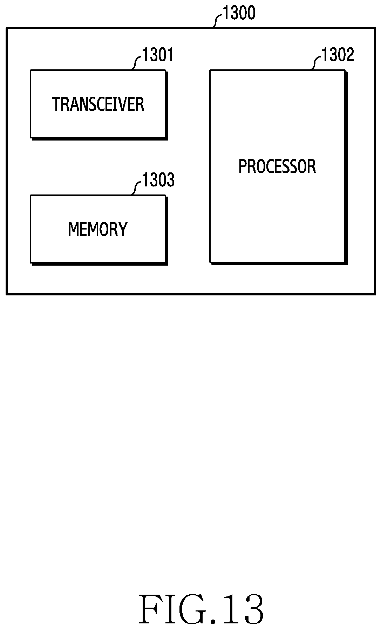

FIG. 13 is a block diagram illustrating a structure of a base station according to an embodiment of the disclosure.

Referring to FIG. 13, the base station 1300 may include a transceiver 1301, a controller (for example, processor) 1302, and a storage 1303. The transceiver 1301, the controller 1302, and the storage 1303 of the base station 1300 may operate according to at least one or a combination of methods corresponding to the above-described embodiments. However, components of the base station 1300 are not limited to the above-described example. According to another embodiment, the base station 1300 may include a larger or smaller number of components than the above-described components. Furthermore, in a specific case, the transceiver 1301, the controller 1302, and the storage 1303 may be implemented in the form of a single chip.

According to an embodiment, the transceiver 1301 may include a transmitter and a receiver. The transceiver 1301 may transmit/receive signals with the UE. The signals may include control information and data. The transceiver 1301 may include an RF transmitter configured to up-convert and amplify the frequency of transmitted signals, and an RF receiver configured to low-noise-amplify received signals and down-convert the frequency thereof. The transceiver 1301 may receive signals through a radio channel, output the same to the controller 1302, and transmit signals output from the controller 1302 through the radio channel.

The controller 1302 may control a series of processes such that the base station can operate according to the above-described embodiments of the disclosure. For example, the controller 1302 may perform or control the base station's operations for performing at least one or a combination of the methods according to embodiments of the disclosure. The controller 1302 may include at least one processor. For example, the controller 1302 may include a communication processor (CP) which performs control for communication and an application processor (AP) which controls upper layers (for example, applications).

The storage 1303 may store control information (for example, channel estimation-related information generated using DMRSs transmitted in a PUSCH determined by the base station 1300), data, and control information or data received from the UE, and may have a region for storing data necessary for control of the controller 1302 and data produced during control by the controller 1302.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. A method performed by a user equipment (UE) in a wireless communication system, the method comprising:

    receiving configuration information on a wake-up signal (WUS) from a base station;
    based on the configuration information on the WUS, determining a timer indicating a time during which the WUS is received using a wake-up receiver (WUR);
    during the time indicated by the timer, activating the WUR and deactivating a main radio receiver; and
    during the time indicated by the timer, determining at least one of a coverage or a channel state of the user equipment.

2. The method of claim 1, further comprising:

    in case that the WUS fails to be received from the base station during the time indicated by the timer, after the time indicated by the timer expires, deactivating the WUR and activating the main radio receiver; and
    transmitting a feedback regarding activation of the main radio receiver to the base station.

3. The method of claim 1, further comprising:

    receiving, from the base station, a measurement WUS for determining at least one of the coverage or channel state of the user equipment;
    determining a signal strength of the measurement WUS; and
    in case that the signal strength of the measurement WUS is lower than a threshold, determining that the coverage or channel state of the user equipment is not good.

4. The method of claim 1, wherein the configuration information on the WUS comprises at least one of information on a time at which the timer is activated, information that triggers activation of the WUR, and information that triggers deactivation of the main radio receiver.

5. A user equipment (UE) in a wireless communication system, the UE comprising:

    a transceiver; and
    a controller coupled to the transceiver,
    wherein the controller is configured to:

        receive configuration information on a wake-up signal (WUS) from a base station;
        based on the configuration information on the WUS, determine a timer indicating a time during which the WUS is received using a wake-up receiver (WUR);
        during the time indicated by the timer, activate the WUR and deactivate a main radio receiver; and
        during the time indicated by the timer, determine at least one of a coverage or a channel state of the UE.

6. The UE of claim 5, wherein the controller is configured to:

in case that the WUS fails to be received from the base station during the time indicated by the timer, after the time indicated by the timer expires, deactivate the WUR and activate the main radio receiver; and

transmit a feedback regarding activation of the main radio receiver to the base station.

7. The UE of claim 5, wherein the controller is configured to:

in case that a measurement WUS for determining at least one of the coverage or channel state of the UE is received using the WUR, determine a signal strength of the measurement WUS; and

in case that the signal strength of the measurement WUS is lower than a threshold, determine that the coverage or channel state of the UE is not good.

8. The UE of claim 5, wherein the configuration information on the WUS comprises at least one of information on a time at which the timer is activated, information that triggers activation of the WUR, and information that triggers deactivation of the main radio receiver.

9. A method performed by a base station in a wireless communication system, the method comprising transmitting configuration information on a wake-up signal (WUS) to a UE,

wherein the configuration information on the WUS is used by the UE to determine a timer indicating a time during which the WUS is received using a wake-up receiver (WUR),

wherein the timer is used by the UE to activate the WUR and deactivate a main radio receiver, and

wherein the time indicated by the timer is used by the UE to determine at least one of a coverage or a channel state of the UE.

10. The method of claim 9, further comprising receiving a feedback regarding activation of the main radio receiver from the UE,

wherein the feedback regarding activation of the main radio receiver is related to, in case that the UE fails to receive the WUS from the base station during the time indicated by the timer, after the time indicated by the timer expires, deactivating the WUR and activating the main radio receiver.

11. The method of claim 9, further comprising transmitting, to the UE, a measurement WUS for determining, by the UE, at least one of the coverage or channel state of the UE,

wherein the measurement WUS is used to determine a signal strength of the measurement WUS, and

wherein, in case that the signal strength of the measurement WUS is lower than a threshold, the UE determines that the coverage or channel state of the UE is not good.

12. The method of claim 9, wherein the configuration information on the WUS comprises at least one of information on a time at which the timer is activated, information that triggers activation of the WUR, and information that triggers deactivation of the main radio receiver.

13. A base station in a wireless communication system, the base station comprising:

a transceiver; and

a controller coupled to the transceiver,

wherein the controller is configured to transmit configuration information on a wake-up signal (WUS) to a UE,

wherein the configuration information on the WUS is used by the UE to determine a timer indicating a time during which the WUS is received using a wake-up receiver (WUR),

wherein the timer is used by the UE to activate the WUR and deactivate a main radio receiver, and

wherein the time indicated by the timer is used by the UE to determine at least one of a coverage or a channel state of the UE.

14. The base station of claim 13, wherein the controller is configured to receive a feedback regarding activation of the main radio receiver from the UE, and

wherein the feedback regarding activation of the main radio receiver is related to, in case that the UE fails to receive the WUS from the base station during the time indicated by the timer, after the time indicated by the timer expires, deactivating the WUR and activating the main radio receiver.

15. The base station of claim 14, wherein the controller is configured to transmit, to the UE, a measurement WUS for determining, by the UE, at least one of the coverage or channel state of the UE,

wherein the measurement WUS is used to determine a signal strength of the measurement WUS, and wherein, in case that the signal strength of the measurement WUS is lower than a threshold, the UE determines that the coverage or channel state of the UE is not good.

FIG.1

FIG.2

FIG.3

(401)
UE

(402)
gNB

UE capability information request
(410)

UE capability information
(420)

# FIG.4

FIG.5

If timer is expired (602)

$T_{proc,WUS}$

gNB

Wake-up Reciever

WUR is 'disabled'

WUR is 'enabled'

WUR is 'disabled'

Main radio Reciever

Main radio is 'enabled'

Main radio is 'disabled'

Main radio is 'enabled'

: PDCCH indicating WUS mode (601)

: Feedback from WUR (603)

FIG.6

Periodicity (704)

gNB ⊠ RSRP ≤
Threshold
(702)

Wake-up
Reciever | WUR is 'enabled' | WUR is 'disabled' | WUR is 'enabled' |

Main radio
Receiver | Main radio is 'disabled' | Main radio is 'enabled' | Main radio is 'disabled' |

⊠ : Specific WUS for RSRP (701)    ⊠ : Feedback for WUS (703)

# FIG.7

Sequence:     0       1       0       1       1       0
(802)

Received WUS power $P_0$ (803)

$P_1$

$P_2$

Threshold for checking coverage (804)

Threshold of energy detector (801)

# FIG.8

Periodicity (903)

gNB

RSRP ≤
Threshold
(902)

RSRP ≤
Threshold
(902)

Wake-up
Reciever

WUR is 'enabled' | WUR is 'disabled' | WUR is 'enabled' | WUR is 'disabled'

Main radio
Receiver

Main radio is 'disabled' | Main radio is 'enabled' | Main radio is 'disabled' | Main radio is 'enabled'

⊠ : Specific RS for measurement (901)

FIG.9

START

RECEIVE WUS SLEEP MODE CONFIGURATION
INFORMATION BY MEANS OF MAIN RADIO
THROUGH HIGHER LAYER SIGNALING AND L1
SIGNALING
1001

DEACTIVATE MAIN RADIO RECEIVER AND
ACTIVATE WAKE-UP RECEIVER (WUR)
1002

IDENTIFY COVERAGE AND CHANNEL STATE AND
DETERMINE WHETHER TO ACTIVATE MAIN RADIO
RECEIVER, THROUGH WUR
1003

DEACTIVATE WUR AND ACTIVATE MAIN RADIO
RECEIVER
1004

TRANSMIT WAKE-UP FEEDBACK THROUGH
ACTIVATED MAIN RADIO RECEIVER
1005

END

FIG.10

START

TRANSMIT WAKE-UP FEEDBACK THROUGH
ACTIVATED MAIN RADIO RECEIVER — 1101

TRANSMIT WUS FOR MEASUREMENT — 1102

TRANSMIT WUS FOR MEASUREMENT — 1103

END

FIG.11

1200

1201

TRANSCEIVER

1202

PROCESSOR

1203

MEMORY

FIG.12

FIG.13

# EP 4 543 100 A1

<table>
<tr><td align="center">INTERNATIONAL SEARCH REPORT</td><td colspan="2">International application No.<br>**PCT/KR2023/011370**</td></tr>
</table>

**A.    CLASSIFICATION OF SUBJECT MATTER**

**H04W 52/02**(2009.01)i

According to International Patent Classification (IPC) or to both national classification and IPC

**B.    FIELDS SEARCHED**

Minimum documentation searched (classification system followed by classification symbols)

H04W 52/02(2009.01); H04W 48/16(2009.01); H04W 68/00(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: WUS(wake up signal), WUR(wake up receiver), 타이머(timer), 커버리지 (coverage), 채널 상태(channel state), 비활성화(disable), 측정(measurement)

**C.    DOCUMENTS CONSIDERED TO BE RELEVANT**

| Category* | Citation of document, with indication, where appropriate, of the relevant passages | Relevant to claim No. |
|---|---|---|
| X | WO 2018-062787 A1 (LG ELECTRONICS INC.) 05 April 2018 (2018-04-05)<br>See paragraphs [0041] and [0149]-[0152]; claims 1-5; and figure 17. | 1-2,4-6,8-10,12-14 |
| Y | | 3,7,11,15 |
| Y | US 2022-0046540 A1 (HUAWEI TECHNOLOGIES CO., LTD.) 10 February 2022 (2022-02-10)<br>See paragraph [0036]. | 3,7,11,15 |
| A | KR 10-2021-0057732 A (ZTE CORPORATION) 21 May 2021 (2021-05-21)<br>See paragraphs [0029]-[0043]. | 1-15 |
| A | KR 10-2021-0119530 A (BEIJING XIAOMI MOBILE SOFTWARE CO., LTD.) 05 October 2021 (2021-10-05)<br>See paragraphs [0087]-[0108]. | 1-15 |
| A | KR 10-2020-0083483 A (QUALCOMM INCORPORATED) 08 July 2020 (2020-07-08)<br>See claims 1-6. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2023** | **15 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011370**

| Patent document cited in search report | | | Publication date (day/month/year) | Patent family member(s) | | | Publication date (day/month/year) |
|---|---|---|---|---|---|---|---|
| WO | 2018-062787 | A1 | 05 April 2018 | US | 10912021 | B2 | 02 February 2021 |
| | | | | US | 2020-0029276 | A1 | 23 January 2020 |
| US | 2022-0046540 | A1 | 10 February 2022 | CN | 112602356 | A | 02 April 2021 |
| | | | | CN | 112602356 | B | 25 November 2022 |
| | | | | EP | 3834502 | A1 | 16 June 2021 |
| | | | | EP | 3834502 | A4 | 20 October 2021 |
| | | | | WO | 2020-060696 | A1 | 26 March 2020 |
| KR | 10-2021-0057732 | A | 21 May 2021 | CN | 110536381 | A | 03 December 2019 |
| | | | | EP | 3836636 | A1 | 16 June 2021 |
| | | | | US | 2021-0298115 | A1 | 23 September 2021 |
| | | | | WO | 2020-030175 | A1 | 13 February 2020 |
| KR | 10-2021-0119530 | A | 05 October 2021 | CN | 109952789 | A | 28 June 2019 |
| | | | | CN | 109952789 | B | 26 January 2021 |
| | | | | CN | 113038582 | A | 25 June 2021 |
| | | | | CN | 113038582 | B | 17 February 2023 |
| | | | | EP | 3927023 | A1 | 22 December 2021 |
| | | | | EP | 3927023 | A4 | 09 February 2022 |
| | | | | JP | 2022-521692 | A | 12 April 2022 |
| | | | | SG | 11202108784 | A | 29 September 2021 |
| | | | | US | 2022-0150834 | A1 | 12 May 2022 |
| | | | | WO | 2020-164020 | A1 | 20 August 2020 |
| KR | 10-2020-0083483 | A | 08 July 2020 | BR | 112020009261 | A2 | 10 November 2020 |
| | | | | BR | 112020009264 | A2 | 20 October 2020 |
| | | | | CN | 111328458 | A | 23 June 2020 |
| | | | | CN | 111328458 | B | 27 September 2022 |
| | | | | CN | 111328461 | A | 23 June 2020 |
| | | | | CN | 111328461 | B | 04 April 2023 |
| | | | | EP | 3711370 | A1 | 23 September 2020 |
| | | | | EP | 3711399 | A1 | 23 September 2020 |
| | | | | JP | 2021-192527 | A | 16 December 2021 |
| | | | | JP | 2021-502772 | A | 28 January 2021 |
| | | | | JP | 2021-502776 | A | 28 January 2021 |
| | | | | JP | 6884928 | B2 | 09 June 2021 |
| | | | | JP | 6972338 | B2 | 24 November 2021 |
| | | | | KR | 10-2020-0083482 | A | 08 July 2020 |
| | | | | KR | 10-2315771 | B1 | 20 October 2021 |
| | | | | SG | 11202003205 | A | 28 May 2020 |
| | | | | SG | 11202003239 | A | 28 May 2020 |
| | | | | TW | 201924377 | A | 16 June 2019 |
| | | | | TW | 201924406 | A | 16 June 2019 |
| | | | | TW | I725353 | B | 21 April 2021 |
| | | | | TW | I735818 | B | 11 August 2021 |
| | | | | US | 10820299 | B2 | 27 October 2020 |
| | | | | US | 10834699 | B2 | 10 November 2020 |
| | | | | US | 2019-0150094 | A1 | 16 May 2019 |
| | | | | US | 2019-0150114 | A1 | 16 May 2019 |
| | | | | WO | 2019-094480 | A1 | 16 May 2019 |
| | | | | WO | 2019-094494 | A1 | 16 May 2019 |

Form PCT/ISA/210 (patent family annex) (July 2022)